# EUROPÄISCHE PATENTSCHRIFT

(11) **EP 0 678 953 B1**
(45) Veröffentlichungstag und Bekanntmachung des Hinweises auf die Patenterteilung: **10.09.1997**
(21) Anmeldenummer: 94110056.2
(22) Anmeldetag: 29.06.1994
(51) Int. Cl.: H02B 13/035, H02B 13/075

(54) **Kabelanschluss für eine metallgekapselte gasisolierte Hochspannungsschaltanlage**
Cable termination for a metal-clad gas-insulated high voltage switch installation
Terminaison de câble pour un appareillage de commutation blindé métallique à haute tension et à isolement gazeux

(30) Priorität: 19.04.1994 CH 1217/94
(43) Veröffentlichungstag der Anmeldung: 25.10.1995
(73) Patentinhaber: ASEA BROWN BOVERI AG, 5400 Baden (CH)
(72) Erfinder: Classon, John Ake, S-771 90 Ludvika (SE); Schifko, Herbert, CH-8152 Glattbrugg (CH)

(56) Entgegenhaltungen:
- DE-A- 2 459 737
- DE-A- 3 109 669
- FR-A- 2 069 021
- US-A- 3 520 990
- US-A- 3 778 574
- PATENT ABSTRACTS OF JAPAN vol. 2, no. 26 (E-015) 20. Februar 1978 & JP-A-52 146 842 (FUJI ELECTRIC) 6. Dezember 1977
- SIEMENS-ZEITSCHRIFT, Bd.47, Nr.4, April 1973 Seiten 247 - 249 HEINZ BEER ET AL. 'Metallgekapselte, SF6-isolierte Schaltanlage 8D.4 für 245/300 kV Nennspannung'

## Beschreibung

### TECHNISCHES GEBIET

Bei der Erfindung wird ausgegangen von einem Kabelanschluss für eine metallgekapselte gasisolierte Hochspannungsschaltanlage gemäss dem Oberbegriff des Anspruchs 1. Ein Kabelanschluss dieser Art is aus dem Dokument JP-A-52 146 842 bekannt.

### STAND DER TECHNIK

Herkömmliche Kabelanschlüsse, die für den Anschluss von einphasigen Hochspannungskabeln an einphasig metallgekapselte gasisolierte Schaltanlagen ausgelegt sind, sind vergleichsweise aufwendig zu montieren, da stets zusätzliche Anpassarbeiten durchgeführt werden müssen. Zudem liess sich bisher das Hochspannungskabel nur vergleichsweise umständlich von der gasisolierten Schaltanlage abtrennen, wenn diese bei der Inbetriebsetzung oder nach Revisionen zur Kontrolle den üblichen Hochspannungsprüfungen unterworfen wurde.

### DARSTELLUNG DER ERFINDUNG

Der Erfindung, wie sie in Patentanspruch 1 definiert ist, liegt die Aufgabe zugrunde, einen Kabelanschluss für eine einphasig metallgekapselte gasisolierte Hochspannungsschaltanlage anzugeben, der eine einfache und schnelle Montage und Demontage des Hochspannungskabels ermöglicht und der eine sichere und einfach zu montierende Erdung dieses Kabels ermöglicht.

Der Kabelanschluss ist für eine einphasig metallgekapselte gasisolierte Hochspannungsschaltanlage vorgesehen. Er weist ein Anschlussgehäuse auf, welches mit den Aktivteilen der gasisolierten Hochspannungsschaltanlage verbundene Anschlussteile umgibt. Ferner weist er eine mit dem Anschlussgehäuse verbundene Kabelanschlusskapselung auf, welche einen Kabelendverschluss mit einem Endbolzen umgibt. Zwischen dem Endbolzen und den Anschlussteilen ist ein elektrisch leitendes Verbindungsstück eingefügt. Das elektrisch leitende Verbindungsstück ist einfach demontierbar ausgebildet. Nach der Demontage des Verbindungsstücks entsteht ein als Trennstrecke ausgelegter Abstand zwischen dem Endbolzen und den Anschlussteilen der gasisolierten Schaltanlage. In dieser Trennstrecke ist eine einfach zu montierende Erdungsvorrichtung vorgesehen für eine sichere Erdung des Endbolzens. Eine derartige Ausgestaltung des Kabelanschlusses ist sehr günstig und erlaubt eine Vielfalt von verschiedenen Hochspannungsprüfungen ohne das Montagepersonal bei den Vorarbeiten zu diesen Prüfungen zu gefährden.

Bei einer Ausgestaltung der Erfindung ist das elektrisch leitende Verbindungsstück als zylindrische Trennstange ausgebildet, die einerseits in eine elektrisch leitende Kontaktierungsanordnung eines Kreuzverbindungsstücks einschiebbar ist, und die andererseits als elektrisch leitende Verbindung mit dem Endbolzen ausgebildet ist. Das Kreuzverbindungsstück ist über ein entfernbares Trennstück mit den Aktivteilen elektrisch leitend verbunden. Das Trennstück ist zur Erhöhung der Betriebssicherheit als Verriegelung für die Trennstange ausgelegt.

Für den Einbau der Erdungsvorrichtung ist eine Befestigungsnut im Innern der Kabelanschlusskapselung oder innen in einem Zwischenflansch, der zwischen der Kabelanschlusskapselung und dem Anschlussgehäuse eingefügt ist, vorgesehen.

Die weiteren Ausgestaltungen der Erfindung sind Gegenstände der abhängigen Ansprüche.

Die Erfindung, ihre Weiterbildung und die damit erzielbaren Vorteile werden nachfolgend anhand der Zeichnung, welche lediglich einen möglichen Ausführungsweg darstellt, näher erläutert.

### KURZE BESCHREIBUNG DER ZEICHNUNG

Es zeigen:
Fig.1 eine Seitenansicht eines Abgangsfeldes einer metallgekapselten gasisolierten Schaltanlage mit einem eingebauten Kabelanschluss nach der Erfindung,
Fig.2 einen stark vereinfachten Schnitt durch den Kabelanschluss,
Fig.3 einen vereinfachten Teilschnitt durch den Bereich der metallgekapselten gasisolierten Schaltanlage, wo das anzuschliessende Hochspannungskabel mit den Aktivteilen der Schaltanlage elektrisch leitend verbunden wird,
Fig.4 einen vereinfachten Teilschnitt durch einen ersten erfindungsgemässen Kabelanschluss, wobei links einer Längsachse das angeschlossene Hochspannungskabel und rechts der Längsachse das Hochspannungskabel bzw. der Kabelendverschluss vor dem Anschliessen dargestellt ist,
Fig.5 einen vereinfachten Teilschnitt durch einen zweiten erfindungsgemässen Kabelanschluss, wobei links einer Längsachse das angeschlossene Hochspannungskabel und rechts der Längsachse das Hochspannungskabel bzw. der Kabelendverschluss vor dem Anschliessen dargestellt ist,
Fig.6 eine Erdungsvorrichtung für den Einbau in einen Kabelanschluss, und
Fig.7 eine vereinfacht dargestellte Draufsicht auf die Erdungsvorrichtung gemäss Fig.6.

Bei allen Figuren sind gleich wirkende Elemente mit gleichen Bezugszeichen versehen. Alle für das unmittelbare Verständnis der Erfindung nicht erforderlichen Elemente sind nicht dargestellt.

### WEGE ZUR AUSFÜHRUNG DER ERFINDUNG

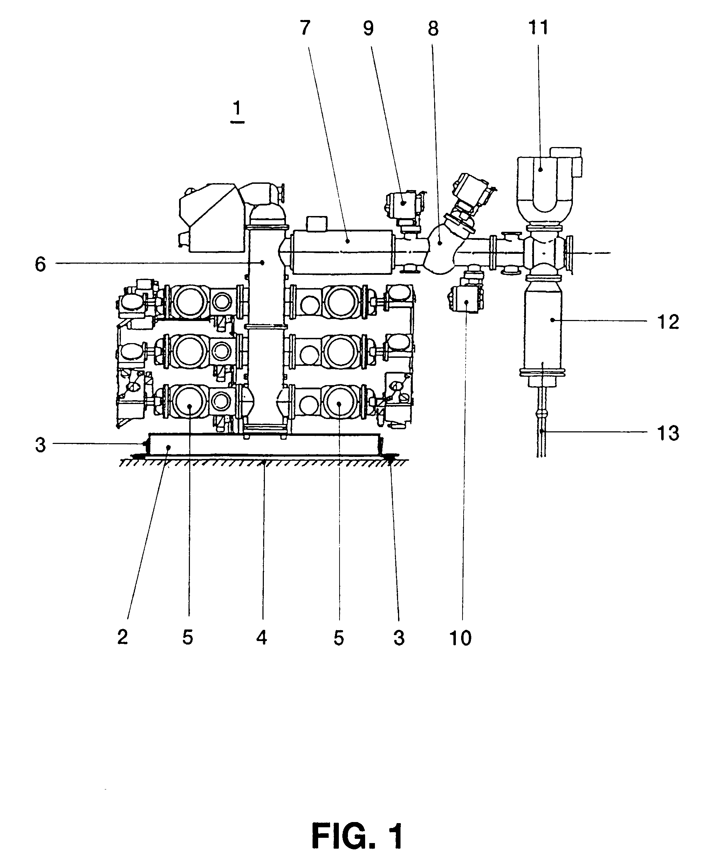

Die Fig.1 zeigt eine schematisch dargestellte Seitenansicht eines Abgangsfeldes 1 einer einphasig metallgekapselten gasisolierten Schaltanlage. Dieses Abgangsfeld 1 weist einen Tragrahmen 2 auf, der aus einem Metallprofil gefertigt ist. An den Ecken des Tragrahmens 2 sind Winkelprofile 3 angebracht, welche der Verbindung des Tragrahmens 2 mit einem Fundament 4 dienen. Diese Verbindung kann kraftschlüssig ausgebildet sein, sie kann jedoch auch ein Gleiten des Tragrahmens 2 auf einer in das Fundament 4 eingelassenen und hier nicht dargestellten Tragschiene zulassen. Bei diesem Typ einer metallgekapselten gasisolierten Schaltanlage sind die Sammelschienen 5 senkrecht übereinander an einer oder an beiden Seiten der senkrecht gestellten Leistungsschalter 6 angeordnet. Der Abgang ist mit einem Stromwandler 7 versehen, dem ein Trenner 8 nachgeschaltet ist. An beiden Seiten des Trenners 8 ist hier jeweils ein Erder 9,10 in das Gehäuse des Trenners 8 eingebaut. Nach dem Trenner 8 ist ein Spannungswandler 11 vorgesehen. Ein Kabelanschluss 12 verbindet das abgehende Hochspannungskabel 13 mit der gasisolierten Schaltanlage. Die Sammelschienen 5 weisen jeweils eine Längsachse auf. Die Längsachsen eines jeden der beiden Sammelschienensysteme liegen in einer Ebene senkrecht übereinander.

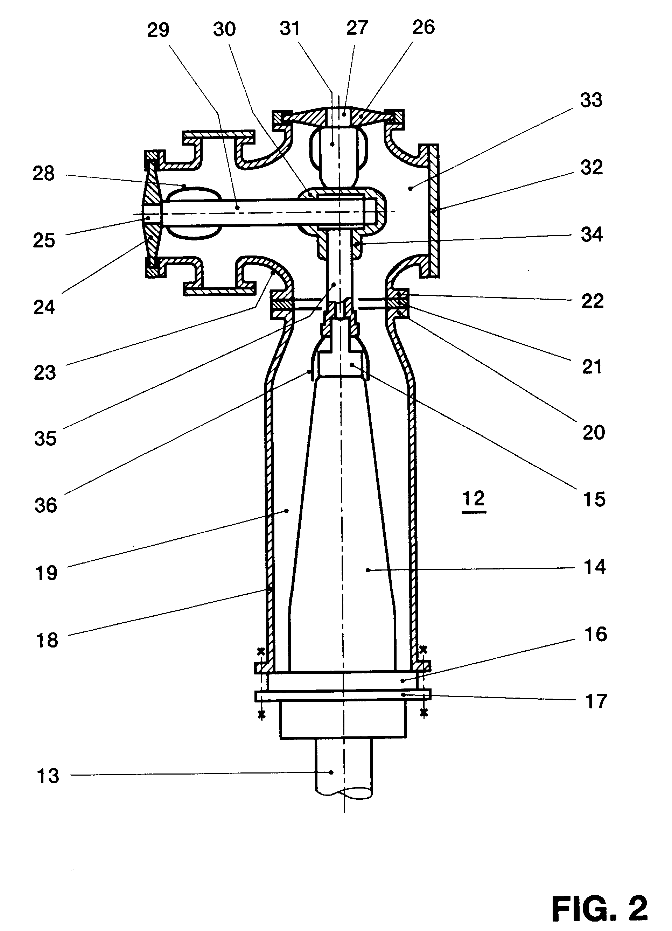

Die Fig.2 zeigt einen stark vereinfachten Schnitt durch den Kabelanschluss 12. Das abgehende Hochspannungskabel 13 ist mit einem Kabelendverschluss 14 versehen, an dessen stirnseitigem Abschluss ein elektrisch leitender Endbolzen 15 angebracht ist. Der Kabelendverschluss 14 weist zudem einen Endverschlussflansch 16 auf, der mittels eines Pressrings 17 druckdicht gegen eine Kabelanschlusskapselung 18 gepresst wird. Die Kabelanschlusskapselung 18 umschliesst den Kabelendverschluss 14 und ein diesen umgebendes isoliergasgefülltes Volumen 19. Die Kabelanschlusskapselung 18 ist mit einem Anschlussflansch 20 versehen, der über einen Zwischenflansch 21 mit einem Anschlussflansch 22 eines Anschlussgehäuses 23 der metallgekapselten gasisolierten Schaltanlage druckdicht verschraubt ist. Das Volumen 19 ist mit dem isoliergasgefüllten Inneren des Anschlussgehäuses 23 verbunden.

Das Anschlussgehäuse 23 weist eine erste mit einem als Schottungsisolator ausgebildeten Stützisolator 24 verschlossene Öffnung auf. Durch den Stützisolator 24 ist ein Stromanschluss 25 geführt, der die Aktivteile, die durch das Anschlussgehäuse 23 eingeschlossen werden, mit den Aktivteilen der übrigen gasisolierten Schaltanlage elektrisch leitend verbindet, hier sind dies die Aktivteile des benachbarten Trenners 8. Das Anschlussgehäuse 23 weist zudem eine zweite mit einem als Schottungsisolator ausgebildeten Stützisolator 26 verschlossene Öffnung auf. Durch den Stützisolator 26 ist ein Stromanschluss 27 geführt, der die Aktivteile, die durch das Anschlussgehäuse 23 eingeschlossen werden, mit dem hier oben an das Anschlussgehäuse 23 angeflanschten Spannungswandler 11 verbindet.

Innerhalb des Anschlussgehäuses 23 ist der Stromanschluss 25 mit einer nicht dargestellten, im Innern einer Abschirmung 28 angeordeten, Kontaktierungsanordnung verbunden. In diese Kontaktierungsanordnung ist ein rohr- oder bolzenförmig ausgebildetes, herausnehmbares Trennstück 29 eingeschoben, welches die elektrische Verbindung zu einem Kreuzverbindungsstück 30 herstellt. Das Kreuzverbindungsstück 30 wird durch ein mit dem Stromanschluss 27 elektrisch leitend verbundenes Leiterstück 31 in Position gehalten. Das Anschlussgehäuse 23 weist eine weitere, mit einem Verschlussflansch 32 druckdicht verschlossene Öffnung 33 auf. Diese Öffnung 33 dient als Montageöffnung, wenn das Trennstück 29 ein- bzw. ausgebaut wird. An die Öffnung 33 kann, wenn zwei parallele Hochspannungskabel 13 an die metallgekapselte gasisolierte Schaltanlage angeschlossen werden sollen, ein weiteres Anschlussgehäuse 23, welches die entsprechenden Aktivteile enthält, und welches mit einem weiteren Kabelanschluss 12 verbunden ist, angeflanscht werden. Für die elektrische Verbindung mit den Aktivteilen der übrigen gasisolierten Schaltanlage muss lediglich das herausnehmbare Trennstück 29 entsprechend verlängert werden.

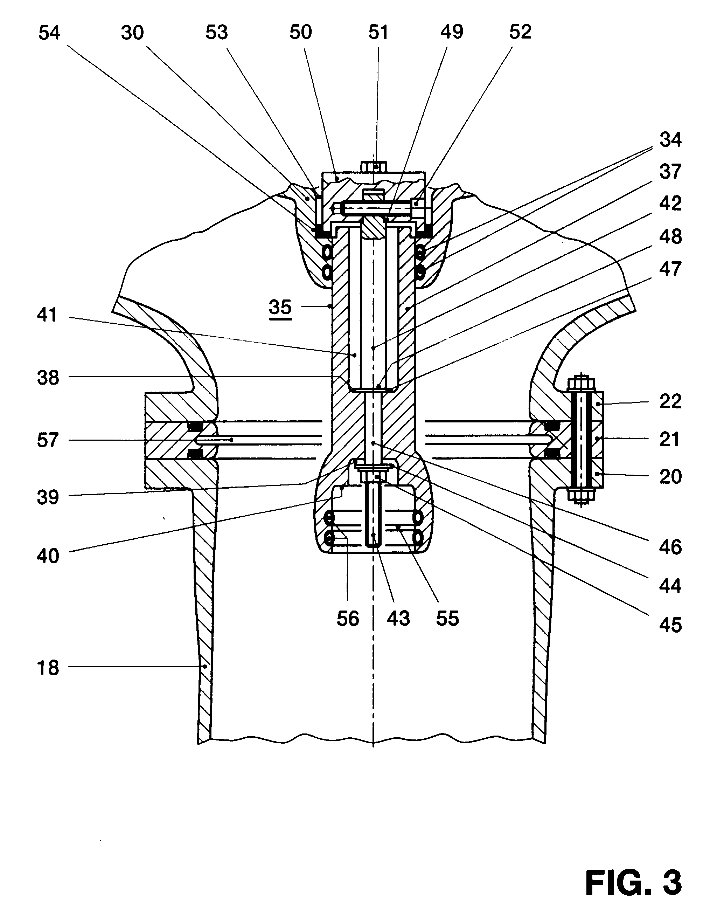

Auf der dem Leiterstück 31 gegenüberliegenden Seite des Kreuzverbindungsstücks 30 ist eine Kontaktierungsanordnung 34 vorgesehen, in welche eine Trennstange 35 eingeschoben ist. Die Ausbildung dieses Bereiches ist aus Fig.3 zu ersehen. Die Trennstange 35 stellt die elektrische Verbindung her mit dem Endbolzen 15 des Kabelendverschlusses 14. Das Trennstück 29 kann bei Bedarf durch das Kreuzverbindungsstück 30 hindurch demontiert werden. Das Trennstück 29 verhindert im eingebauten Zustand, dass die Trennstange 35 nach oben aus dem Kreuzverbindungsstücks 30 ausgefahren werden kann. Das Trennstück 29 kann nur eingebaut werden, wenn die Trennstange 35 ausgebaut oder wenn sie definitiv in Position ist. Das Trennstück 29 ist als zusätzliche Verriegelung für die Trennstange 35 ausgelegt. Vor dem Ausbau der Trennstange 35 muss das Leiterstück 31 demontiert werden. Eine Abschirmung 36 stellt sicher, dass die Kanten des Endbolzens 15 sich nicht störend auf das elektrische Feld in diesem Bereich auswirken.

Der in Fig.3 vereinfacht dargestellte Teilschnitt zeigt den Bereich der metallgekapselten gasisolierten Schaltanlage, wo die Trennstange 35 das anzuschliessende Hochspannungskabel 13 mit dem Kreuzverbindungsstück 30 und damit mit den Aktivteilen der übrigen Schaltanlage elektrisch leitend verbindet. Die Trennstange 35 weist ein im wesentlichen zylindrisch ausgebildetes Leiterelement 37 aus Metall auf mit einer zentralen, mehrere Absätze 38,39,40 aufweisenden Bohrung 41. In der Bohrung 41 ist ein Gewindebolzen 42 drehbar geführt. Der Gewindebolzen 42 weist an seinem unteren Ende einen mit einem Gewinde versehenen Schaft 43 auf, auf welchen eine Unterlagscheibe 44 aufgeschoben ist. Auf den Schaft 43 ist zudem eine Mutter 45 aufgeschraubt, welche die Unterlagscheibe 44 hält. An den Schaft 43 schliesst sich ein weiterer, mit glatter Oberfläche ausgeführter Schaft 46 des Gewindebolzens 42 an, der einen etwas grösseren Durchmesser aufweist. Der Schaft 46 wird durch einen etwas engeren Bereich der Bohrung 41 radial geführt. Der etwas engeren Bereich der Bohrung 41 endet bei dem Absatz 38. Auf dem Absatz 38 liegt eine Unterlagscheibe 47 auf, durch die hindurch sich der Schaft 46 erstreckt. Der Gewindebolzen 42 weist einen Absatz 48 auf, der auf der Unterlagscheibe 47 aufliegt.

Auf einem weiteren Absatz 49 des Gewindebolzens 42 liegt ein zylindrisch ausgebildetes Gegenstück 50 auf, an dessen Oberseite ein Sechskant 51 angeformt ist. Das obere Ende des Gewindebolzens 42 ragt in eine zentrale Aussparung auf der Unterseite des Gegenstücks 50 hinein. Eine Mitnehmerschraube 52 durchdringt das Gegenstück 50 und eine Querbohrung durch das Zentrum des Gewindebolzens 42, sodass diese beiden Teile zusammenwirken können. Die Mitnehmerschraube 52 ist mit dem Gegenstück 50 verschraubt, sie braucht nicht gesichert werden, da die Achse der Mitnehmerschraube 52, wenn die Trennstange 35 korrekt montiert ist, unterhalb des Randes einer in das Kreuzverbindungsstück 30 für das Gegenstück 50 eingelassenen Aussparung 53 liegt, sodass sich die Mitnehmerschraube 52 im Betrieb keinesfalls lösen kann.

Der Boden der Aussparung 53 ist mit einem isolierenden Ring 54, der beispielsweise einen L-förmigen Querschnitt aufweist, abgedeckt. Das Gegenstück 50 stützt sich auf diesen Ring 54 ab, sodass bei einem Drehen des Gegenstücks 50 kein metallischer Abrieb entstehen kann. Der Ring 54 verhindert zudem, dass das Gegenstück 50 seitlich die Innenwand der Aussparung 53 berühren kann. Diese Isolation ist notwendig, um zu vermeiden, dass im Betrieb Streuströme über den Gewindebolzen 42, die Mitnehmerschraube 52 und das Gegenstück 50 direkt, und an der für den Stromfluss mit Spiralkontakten versehenen Kontaktierungsanordnung 34 vorbei, in das Kreuzverbindungsstück 30 fliessen und dabei unzulässige Schmorstellen und damit verbunden auch störende Schmutzpartikel erzeugen. Um metallische Abriebpartikel zu vermeiden, können auch beidseitig der Unterlagscheibe 44 und auch beidseitig der Unterlagscheibe 47 Unterlagscheiben aus Kunststoff, beispielsweise aus Teflon, vorgesehen werden.

Die Mutter 45 wird nach dem Einbau des Gewindebolzens 42 in das Leiterelement 37 fest mit dem Gewindebolzen 42 verbunden, dies kann beispielsweise durch ein Verkleben erfolgen. Die Bohrung 41 ist im untersten Teil als eine Kontaktierungsanordnung 55 ausgebildet, bei der in zwei Nuten Spiralkontakte 56 eingelegt sind. Durch diese Kontaktierungsanordnung 55 wird die elektrisch leitende Verbindung zwischen der Trennstange 35 und dem Endbolzen 15 gewährleistet.

In der Fig.3 ist zudem der Zwischenflansch 21 etwas deutlicher dargestellt. Der Zwischenflansch 21 ist auf seiner Innenseite mit einer parallele Flanken aufweisenden Befestigungsnut 57 versehen, die für den Einbau von Elementen einer Erdungsvorrichtung vorgesehen ist. Die Befestigungsnut 57 kann auch in den oberen Teil der Kabelanschlusskapselung 18, insbesondere in den Anschlussflansch 20, eingearbeitet sein oder auch in den Anschlussflansch 22 des Anschlussgehäuses 23, wobei der Zwischenflansch 21 entfallen könnte. Der Zwischenflansch 21 weist zudem auf seinen dem Anschlussgehäuse 23 und der Kabelanschlusskapselung 18 zugewandten Stirnseiten jeweils eine nicht bezeichnete mit Rundschnurringen versehene Nut auf. Zusätzlich sind auf den Stirnseiten auch weitere, jedoch nicht dargestellte Nuten angebracht für das Einbringen von Korrosionsschutzfett.

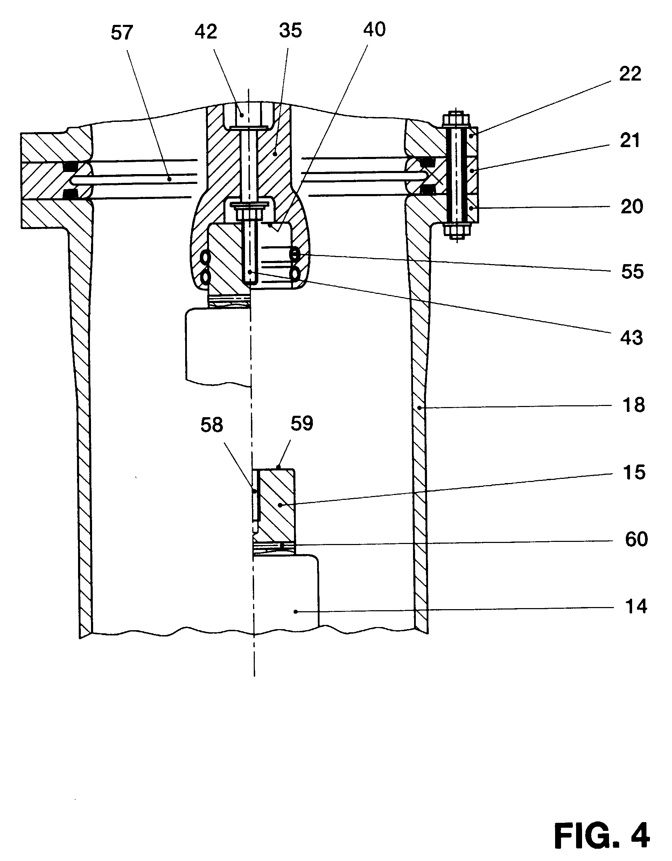

Die Fig.4 zeigt einen vereinfachten Teilschnitt durch einen ersten erfindungsgemässen Kabelanschluss. Der hier verwendete Endbolzen 15 des Kabelendverschlusses 14 passt direkt in die Kontaktierungsanordnung 55 der Trennstange 35. Der Endbolzen 15 weist im Zentrum eine Gewindebohrung 58 auf, in die das Gewinde des Schafts 43 des Gewindebolzens 42 passt. Wird der Schaft 43 mit der Gewindebohrung 58 in Eingriff gebracht, so kann durch ein entsprechendes Drehen an dem Sechskant 51 der Gewindebolzen 42 so gedreht werden, dass der Endbolzen 15 mit seiner Stirnseite 59 in Richtung auf den Absatz 40 der Trennstange 35 zu in die Kontaktierungsanordnung 55 eingezogen wird. Sobald die Stirnseite 59 an dem Absatz 40 anliegt und der Sechskant 51 mit einem vorgegebenen Drehmoment festgezogen ist, ist die Strombahn des Kabelanschlusses korrekt hergestellt worden. Der Sechskant 51 des Gegenstücks 50 ragt jetzt nicht mehr in die Bahn des Trennstücks 29, was ein weiterer Hinweis darauf ist, dass die Strombahn des Kabelanschlusses korrekt hergestellt worden ist, sodass das Trennstück 29 anschliessend eingebaut werden kann. Der Endbolzen 15 ist mit einer Bohrung 60 versehen, die für das Einführen eines Steckers vorgesehen ist. Bei einem derartigen Kabelendverschluss 14 muss die Verbindung zwischen dem Endbolzen 15 und der Trennstange 35 zusätzlich die Druckkräfte aufnehmen, die bei dem fertig montierten Kabelanschluss 12 durch den im Volumen 19 herrschenden Druck des Isoliergases, beispielsweise SF₆, auf den Kabelendverschluss 14 ausgeübt werden.

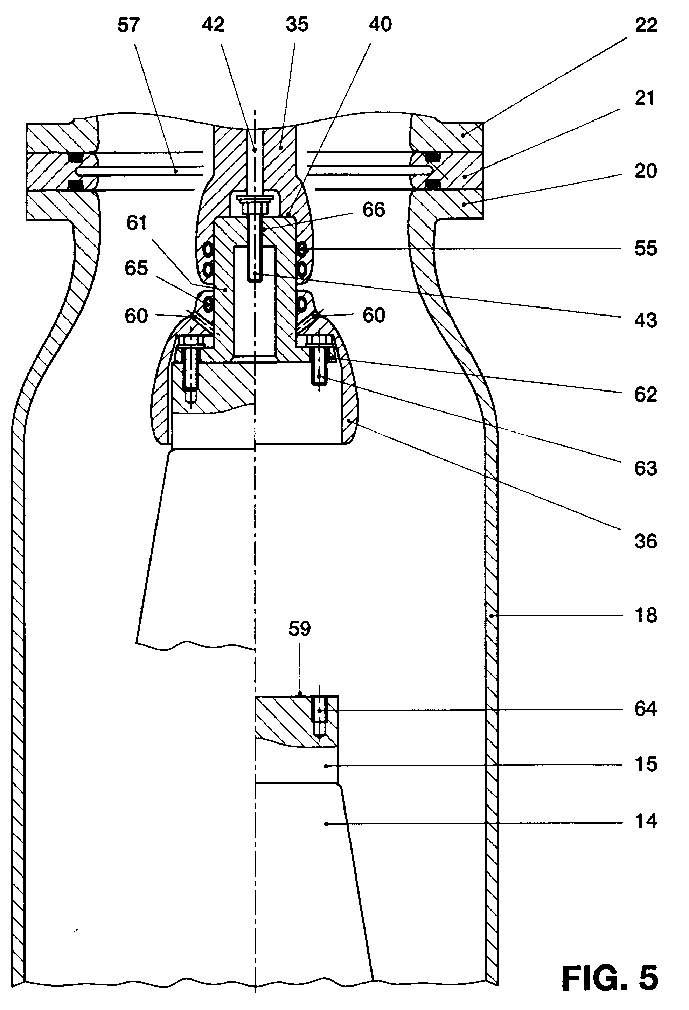

Die Fig.5 zeigt einen vereinfachten Teilschnitt durch einen zweiten erfindungsgemässen Kabelanschluss. Der hier verwendete Endbolzen 15 des Kabelendverschlusses 14 passt nicht direkt in die Kontaktierungsanordnung 55 der Trennstange 35, die den Abmessungen nach der in Fig.4 gezeigten entspricht. Hier wird zusätzlich ein passender Adapter 61 zwischengeschaltet, der einen zylindrischen, in die Kontaktierungsanordnung 55 passenden Teil aufweist, und der mit einem auf die Stirnseite 59 des Endbolzens 15 passenden Flansch 62 versehen ist. Der Flansch 62 ist mittels Schrauben 63, die in entsprechende Gewindebohrungen 64 in der Stirnseite 59 passen, mit dem Endbolzen 15 verbunden. Der Adapter 61 ist aus einem elektrisch gut leitenden Metall gefertigt. Seine Kontakübergangsstellen sind wie die der übrigen in der Strombahn liegenden Kontakübergangsstellen versilbert. Über den zylindrischen Teil des Adapters 61 wird eine Abschirmung 36 geschoben, welche die Kanten des Flansches 62 und die der Schrauben 63 dielektrisch abschirmt. Die Abschirmung 36 muss einen guten elektrischen Kontakt mit dem Adapter 61 haben, dies wird dadurch erreicht, dass innen in die Abschirmung 36 eine mit Spiralkontakten 65 versehene Nut eingelassen ist.

Die Abschirmung 36 ist mit Bohrungen 60 versehen, die für das Einführen eines Steckers vorgesehen sind.

Der Adapter 61 weist im Zentrum seiner der Trennstange 35 zugewandten Seite eine Gewindebohrung 66 auf, in die das Gewinde des Schafts 43 des Gewindebolzens 42 passt. Wird der Schaft 43 mit der Gewindebohrung 66 in Eingriff gebracht, so kann durch ein entsprechendes Drehen an dem Sechskant 51 der Gewindebolzen 42 so gedreht werden, dass der Adapter 61 und mit ihm der Endbolzen 15 mit seiner Stirnseite 59 in Richtung auf den Absatz 40 der Trennstange 35 zu in die Kontaktierungsanordnung 55 eingezogen wird. Sobald die Stirnseite des Adapters 61 an dem Absatz 40 anliegt und der Sechskant 51 mit einem vorgegebenen Drehmoment festgezogen ist, ist die Strombahn des Kabelanschlusses korrekt hergestellt worden. Der Sechskant 51 des Gegenstücks 50 ragt jetzt nicht mehr in die Bahn des Trennstücks 29, was ein weiterer Hinweis darauf ist, dass die Strombahn des Kabelanschlusses korrekt hergestellt worden ist, sodass das Trennstück 29 anschliessend eingebaut werden kann. Bei einem derartig ausgebildeten Kabelendverschluss 14 muss die Verbindung zwischen dem Endbolzen 15 und der Trennstange 35 keine zusätzlichen Druckkräfte aufnehmen, die bei dem fertig montierten Kabelanschluss 12 durch den im Volumen 19 herrschenden Druck des Isoliergases, beispielsweise SF₆, auf den Kabelendverschluss 14 ausgeübt werden, da bei diesem Typ die konisch ausgebildete Aussenwand des Kabelendverschlusses 14, die aus einer Feststoffisolation besteht, den Gasdruck aufnimmt.

Der Adapter 61 kann auch für weitere Typen von Endbolzen 15 passend ausgebildet sein, sodass auch andere als die beiden hier gezeigten Kabelendverschlüsse 14, die für feststoffisolierte Hochspannungskabel vorgesehen sind, problemlos an die metallgekapselte gasisolierte Schaltanlage angeschlossen werden können. Es ist auch vorstellbar, die Kabelanschlusskapselung 18 gegebenenfalls entsprechend anzupassen. Der Kabelanschluss 12 kann auch, entsprechend modifiziert, für den Anschluss von Ölkabeln eingesetzt werden.

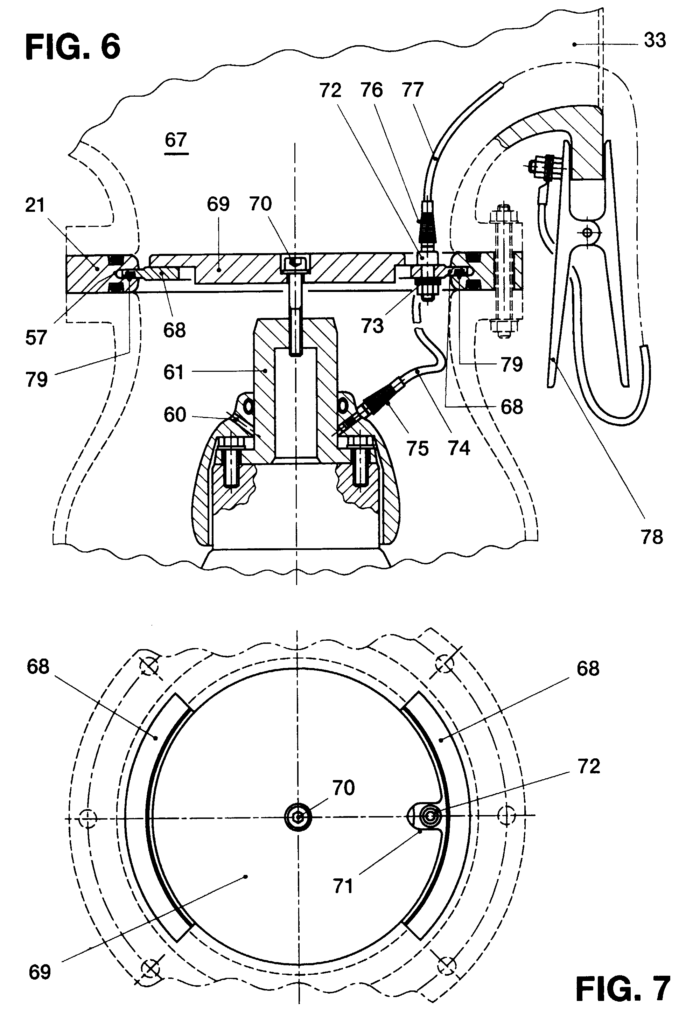

Die Fig.6 zeigt eine Erdungsvorrichtung 67 für den Einbau in Kabelanschlüsse der vorab beschriebenen Art. Die Fig.7 zeigt eine vereinfacht dargestellte Draufsicht auf die Erdungsvorrichtung 67 gemäss Fig.6. Die Umrisse der diese Vorrichtung umgebenden Gehäuse sind der besseren Anschaulichkeit halber nur gestrichelt dargestellt. Vor dem Einbau dieser Erdungsvorrichtung 67 ist die Trennstange 35 entfernt worden, sodass eine hinreichend grosse Trennstrecke zwischen dem Endbolzen 15 bzw. dem Adapter 61 und dem Kreuzverbindungsstück 30 entstanden ist. In die Befestigungsnut 57 des Zwischenflansches 21 werden hier, etwa einander gegenüberliegend, zwei Segmente 68 eingeschoben. Die Segmente 68 sind aus einem Ring ausgeschnitten und sind etwa so breit, dass eine bei der Montage auf sie aufgelegte kreisförmige Platte 69 keinesfalls zwischen ihnen durchtreten kann und doch noch soviel Spiel behält, dass etwaige Gusstoleranzen der Gehäuse die Funktionsfähigkeit der Erdungsvorrichtung 67 nicht beeinträchtigen können. Durch die Mitte der Platte 69 führt eine Schraube 70, welche die Platte 69 mit dem Adapter 61 verbindet und die Platte 69 auf die Segmente 68 drückt.

Die Platte 69 weist zudem einen Ausschnitt 71 auf, der Platz lässt für eine in eines der Segmente 68 eingeschraubte Steckbuchse 72, die nach oben aus dem Segment 68 hervorsteht. Die Steckbuchse 72 durchdringt das Segment 68. An der unteren Seite ist mittels einer Schraubverbindung 73 ein flexibles isoliertes Kabel 74 dauerhaft an der Steckbuchse 72 und damit am Segment 68 befestigt. Das Kabel 74 weist am anderen Ende einen Stecker 75 auf, der in eine der Bohrungen 60 eingesteckt ist. Das Kabel 74 verbindet die Abschirmung 36 und den mit ihr verbundenen Adapter 61 elektrisch leitend mit dem auf dem Potential der Gehäuse, in der Regel ist dies das Erdpotential, liegenden Segment 68. In die Steckbuchse 72 ist ein weiterer Stecker 76 eingesteckt, der an einem flexiblen isolierten Kabel 77 befestigt ist. Das Kabel 77 führt durch die Öffnung 33 aus dem Anschlussgehäuse 23 heraus zu einer metallisch blanken Klemmenzange 78, die an einem Flansch des Anschlussgehäuses 23 festgeklemmt ist. Das Kabel 77 verbindet das Segmente 68 mit dem Potential des Anschlussgehäuses 23.

Um einen guten elektrischen Kontakt zwischen den Segmenten 68 und dem Zwischenflansch 21 herzustellen, ist der in die Befestigungsnut 57 eingeschobene Teil der mindestens zwei Segmente 68 der Erdungsvorrichtung 67 mit einem herausstehend in eine nicht bezeichnete Nut eingeklebten Rundschnurring 79 versehen. Die Dicke der mit dem Rundschnurring 79 versehenen Segmente 68 ist etwas grösser als die Breite der Öffnung der parallele Flanken aufweisenden Befestigungsnut 57, sodass beim Einschieben der Segmente 68 in die Befestigungsnut 57 stets ein Kratzen zwischen den Segmenten 68 und den metallischen Flanken der Befestigungsnut 57 auftritt, wodurch etwaige schlecht leitende Oxidschichten zumindest stellenweise aufgebrochen werden, sodass ein vergleichsweise guter elektrischer Kontaktübergang stets gewährleistet ist. Der Rundschnurring 79 verhindert zudem ein Herausrutschen der Segmente 68 aus der Befestigungsnut 57. Sobald die Platte 69 auf die Segmente 68 aufgelegt ist, verunmöglicht zusätzlich die Form dieser Platte 69 ein Herausrutschen der Segmente 68 aus der Befestigungsnut 57.

Beim Einbau der Erdungsvorrichtung 67 wird zuerst das Segment 68 über das Kabel 77 mit der Klemmenzange 78 verbunden. Danach wird die Klemmenzange 78 mit einem Flansch des Anschlussgehäuses 23 leitend verbunden. Erst nachdem auf diese Art das Segment 68 sicher geerdet ist, wird es, zusammen mit dem fest daran angebrachten Kabel 74 durch die Öffnung 33 in die Trennstrecke eingeführt. Hier wird zuerst der am Kabel 74 angebrachte Stecker 75 in eine der dafür vorgesehenen Bohrungen 60 gesteckt. Damit ist der Endbolzen 15 einwandfrei geerdet, eine Gefährdung des Montagepersonals ist damit ausgeschlossen. Nun kann das mit dem Kabel 74 fest verbundene Segment 68 in die Befestigungsnut 57 eingeschoben werden. Der Endbolzen 15 ist nun elektrisch leitend mit den Gehäusen verbunden, und eine vorschriftsmässige Erdung des Hochspannungskabels 13 ist gewährleistet.

Daran anschliessend wird das Kabel 77 mit Hilfe des Steckers 76 von dem Segment 68 getrennt und die Klemmenzange 78 wird ebenfalls entfernt. Nun kann auch das zweite der Segmente gefahrlos eingebaut werden. Danach wird die Platte 69 aufgelegt und mittels der Schraube 70 mit dem Endbolzen 15 kraftschlüssig verbunden. Die Öffnung 33 wird nun wieder mittels des Verschlussflansches 32 druckdicht verschlossen. Dieser Anlagenteil kann nun vor der Hochspannungsprüfung auf bekannte Art mit Isoliergas, beispielsweise mit SF₆, gefüllt werden. Durch die Erdungsvorrichtung 67 ist sichergestellt, dass die für die Prüfung an die Aktivteile der metallgekapselten gasisolierten Schaltanlage angelegte Hochspannung keinesfalls den Kabelendverschluss 14 und das Hochspannungskabel 13 beaufschlagen kann. Nach dem Abschluss der Hochspannungsprüfung wird die Erdungsvorrichtung 67 Schritt für Schritt in umgekehrter Reihenfolge wie beim Einbau wieder demontiert, sodass auch dabei keine Gefährdung des Montagepersonals auftreten kann.

Soll das Hochspannungskabel 13 einer Hochspannungsprüfung unterworfen werden, so bleibt die Trennstange 35 eingebaut, das Trennstück 29 wird ausgebaut und über den Stromanschluss 27 wird mit Hilfe einer aufgesetzten Prüfdurchführung die das Hochspannungskabel 13 beaufschlagende Prüfspannung eingespeist.

### BEZEICHNUNGSLISTE

- 1: Abgangsfeld
- 2: Tragrahmen
- 3: Winkelprofil
- 4: Fundament
- 5: Sammelschienen
- 6: Leistungsschalter
- 7: Stromwandler
- 8: Trenner
- 9,10: Erder
- 11: Spannungswandler
- 12: Kabelanschluss
- 13: Hochspannungskabel
- 14: Kabelendverschluss
- 15: Endbolzen
- 16: Endverschlussflansch
- 17: Pressring
- 18: Kabelanschlusskapselung
- 19: Volumen
- 20: Anschlussflansch
- 21: Zwischenflansch
- 22: Anschlussflansch
- 23: Anschlussgehäuse
- 24: Stützisolator
- 25: Stromanschluss
- 26: Stützisolator
- 27: Stromanschluss
- 28: Abschirmung
- 29: Trennstück
- 30: Kreuzverbindungsstück
- 31: Leiterstück
- 32: Verschlussflansch
- 33: Öffnung
- 34: Kontaktierungsanordnung
- 35: Trennstange
- 36: Abschirmung
- 37: Leiterelement
- 38,39,40: Absatz
- 41: Bohrung
- 42: Gewindebolzen
- 43: Schaft
- 44: Unterlagscheibe
- 45: Mutter
- 46: Schaft
- 47: Unterlagscheibe
- 48,49: Absatz
- 50: Gegenstück
- 51: Sechskant
- 52: Mitnehmerschraube
- 53: Aussparung
- 54: Ring
- 55: Kontaktierungsanordnung
- 56: Spiralkontakt
- 57: Befestigungsnut
- 58: Gewindebohrung
- 59: Stirnseite
- 60: Bohrung
- 61: Adapter
- 62: Flansch
- 63: Schraube
- 64: Gewindebohrungen
- 65: Spiralkontakte
- 66: Gewindebohrung
- 67: Erdungsvorrichtung
- 68: Segment
- 69: Platte
- 70: Schraube
- 71: Ausschnitt
- 72: Steckbuchse
- 73: Schraubverbindung
- 74: Kabel
- 75,76: Stecker
- 77: Kabel
- 78: Klemmenzange
- 79: Rundschnurring

## Patentansprüche

1. Kabelanschluss für eine einphasig metallgekapselte gasisolierte Hochspannungsschaltanlage mit einem Anschlussgehäuse (23), welches mit den Aktivteilen der gasisolierten Hochspannungsschaltanlage verbundene Anschlussteile umgibt, mit einer mit dem Anschlussgehäuse (23) verbundenen Kabelanschlusskapselung (18), welche einen Kabelendverschluss (14) mit einem Endbolzen (15) umgibt, mit einem zwischen den Endbolzen (15) und den Anschlussteilen eingefügten elektrisch leitenden Verbindungsstück,
- wobei das elektrisch leitende Verbindungsstück einfach demontierbar ausgebildet ist, und
- wobei nach der Demontage des Verbindungsstücks ein als Trennstrecke ausgelegter Abstand zwischen dem Endbolzen (15) und den Anschlussteilen entsteht, dadurch gekennzeichnet,
- dass eine einfach zu montierende Erdungsvorrichtung (67) in dieser Trennstrecke vorgesehen ist für eine sichere Erdung des Endbolzens (15).

2. Kabelanschluss nach Anspruch 1, dadurch gekennzeichnet,
- dass das elektrisch leitende Verbindungsstück als zylindrische Trennstange (35) ausgebildet ist, die einerseits in eine elektrisch leitende Kontaktierungsanordnung (34) eines Kreuzverbindungsstücks (30) einschiebbar ist, und die andererseits für die elektrisch leitende Verbindung mit dem Endbolzen (15) gestaltet ist.

3. Kabelanschluss nach Anspruch 2, dadurch gekennzeichnet,
- dass das Kreuzverbindungsstück (30) über ein entfernbares Trennstück (29) mit den Aktivteilen elektrisch leitend verbunden ist, und
- dass das Trennstück (29) als zusätzliche Verriegelung für die Trennstange (35) ausgelegt ist.

4. Kabelanschluss nach Anspruch 2, dadurch gekennzeichnet,
- dass für die elektrisch leitende Verbindung der zylindrischen Trennstange (35) mit dem Endbolzen (15) eine an das entsprechende Ende der Trennstange (35) angeformte, mit Spiralkontakten versehene zylindrisch ausgebildete Kontaktierungsanordnung (55) vorgesehen ist, welche den Endbolzen (15) umfasst.

5. Kabelanschluss nach Anspruch 4, dadurch gekennzeichnet,
- dass ein die Trennstange (35) durchdringender Gewindebolzen (42) den Endbolzen (15) in der Kontaktierungsanordnung (55) fixiert.

6. Kabelanschluss nach Anspruch 5, dadurch gekennzeichnet,
- dass der Gewindebolzen (42) durch eine Mitnehmerschraube (52) mit einem drehbar in dem Kreuzverbindungsstück (30) gelagerten Gegenstück (50) verbunden ist.

7. Kabelanschluss nach Anspruch 1, dadurch gekennzeichnet,
- dass für den Einbau der Erdungsvorrichtung (67) eine Befestigungsnut (57) innen in einem Zwischenflansch (21), der zwischen der Kabelanschlusskapselung (18) und dem Anschlussgehäuse (23) eingefügt ist, vorgesehen ist.

8. Kabelanschluss nach Anspruch 7, dadurch gekennzeichnet,
- dass die Erdungsvorrichtung (67) mindestens zwei Segmente (68) aus Metall aufweist, die in die Befestigungsnut (57) eingeschoben werden,
- dass sich auf die mindestens zwei Segmente (68) eine Platte (69) abstützt, die mit dem Endbolzen (15) verbunden ist, und
- dass der Endbolzen (15) mit Hilfe einer Erdverbindung mit mindestens einem der Segmente (68) elektrisch leitend verbunden ist.

9. Kabelanschluss nach Anspruch 1, dadurch gekennzeichnet,
- dass der in die Befestigungsnut (57) eingeschobene Teil der mindestens zwei Segmente (68) der Erdungsvorrichtung (67) mit einem herausstehend in eine Nut eingeklebten Rundschnurring (79) versehen ist, und
- dass die Dicke der mit dem Rundschnurring (79) versehenen Segmente (68) etwas grösser ist, als die Breite der Befestigungsnut (57).

10. Kabelanschluss nach Anspruch 8, dadurch gekennzeichnet,
- dass die Erdverbindung mit dem mindestens einen der Segmente (68) dauerhaft verbunden ist, während sie an dem Endbolzen (15) steckbar ausgeführt ist, und
- dass die Erdverbindung als isoliertes Kabel (74) ausgeführt ist.

## Claims

1. Cable connection for a single-phase, metal-encapsulated, gas-insulated, high-voltage switching installation having a connection enclosure (23) which surrounds connecting parts which are connected to the active parts of the gas-insulated, high-voltage switching installation, having cable connection encapsulation (18) which is connected to the connection enclosure (23) and surrounds a cable termination (14) with an end bolt (15), having an electrically conductive connecting piece which is inserted between the end bolt (15) and the connecting parts,
- the electrically conductive connecting piece being constructed such that it can easily be removed, and
- after removal of the connecting piece, a separation, which is designed as an isolating gap, being produced between the end bolt (15) and the connecting parts, charaterized in that
- an earthing device (67), which can easily be installed, is provided in this isolating gap for reliable earthing of the end bolt (15).

2. Cable connection according to Claim 1, characterized in that
- the electrically conductive connecting piece is constructed as a cylindrical isolating rod (35) which, on the one hand, can be pushed into an electrically conductive contact-making arrangement (34) of a cross-connecting piece (30) and which, on the other hand, is designed for electrically conductive connection to the end bolt (15).

3. Cable connection according to Claim 2, characterized in that
- the cross-connecting piece (30) is electrically conductively connected via a removable isolating piece (29) to the active parts, and
- the isolating piece (29) is designed as an additional interlock for the isolating rod (35).

4. Cable connection according to Claim 2, characterized in that
- a cylindrically constructed contact-making arrangement (55) is provided for the electrically conductive connection of the cylindrical isolating rod (35) to the end bolt (15), which contact-making arrangement (55) is integrally formed on the corresponding end of the isolating rod (35), is provided with spiral contacts and surrounds the end bolt (15).

5. Cable connection according to Claim 4, characterized in that
- a threaded bolt (42) which passes through the isolating rod (35) fixes the end bolt (15) in the -contact-making arrangement (55).

6. Cable connection according to Claim 5, characterized in that
- the threaded bolt (42) is connected by means of a driver screw (52) to a mating piece (50) which is mounted in the cross-connecting piece (30) such that it can rotate.

7. Cable connection according to Claim 1, characterized in that
a mounting groove (57) is provided internally in an intermediate flange (21) for the installation of the earthing device (67), which intermediate flange (21) is inserted between the cable connection encapsulation (18) and the connection enclosure (23).

8. Cable connection according to Claim 7, characterized in that
- the earthing device (67) has at least two segments (68) which are made of metal and are pushed into the mounting groove (57),
- a plate (69), which is connected to the end bolt (15), is supported on the at least two segments (68), and
- the end bolt (15) is electrically conductively connected with the aid of an earthing connection to at least one of the segments (68).

9. Cable connection according to Claim 1, characterized in that
- that part of the at least two segments (68) of the earthing device (67) which is pushed into the mounting groove (57) is provided with an O-ring (79) which is bonded into a groove such that it projects, and
- the thickness of that segment (68) which is provided with the O-ring (79) is somewhat larger than the width of the mounting groove (57).

10. Cable connection according to Claim 8, characterized in that
- the earthing connection is permanently connected to at least one of the segments (68), while it is designed such that it can be plugged onto the end bolt (15), and
- the earthing connection is designed as an insulating cable (74).

## Revendications

1. Terminaison de câble pour un appareillage de commutation monophasé blindé métallique à haute tension et à isolement gazeux avec un boîtier de raccordement (23), lequel entoure les parties de raccordement reliées avec les parties actives de l'appareillage de commutation à haute tension et à isolement gazeux, avec un blindage de terminaison de câble (18) relié au boîtier de raccordement (23), lequel entoure une boîte d'extrémité de câble (14) munie d'un boulon d'extrémité (15), avec une pièce de liaison conductrice d'électricité insérée entre le boulon d'extrémité (15) et les parties de raccordement,
- la pièce de liaison conductrice d'électricité étant réalisée de manière à être facilement démontable,
- après le démontage de la pièce de liaison, il se crée un écart conçu comme un espace de séparation entre le boulon d'extrémité (15) et les parties de raccordement, caractérisée par le fait
- que dans cet espace de séparation est prévu un dispositif de mise à la terre (67) facile à monter qui garantit une mise à la terre sûre du boulon d'extrémité (15).

2. Terminaison de câble selon la revendication 1, caractérisée par le fait
- que la pièce de liaison conductrice d'électricité est réalisée sous la forme d'une tige de séparation (35) cylindrique qui peut être insérée d'un côté dans un arrangement de contacts (34) conducteurs d'électricité d'une pièce de liaison en croix (30), et qui de l'autre côté est configurée pour établir la liaison électrique avec le boulon d'extrémité (15).

3. Terminaison de câble selon la revendication 2, caractérisée par le fait
- que la pièce de liaison en croix (30) est reliée électriquement avec les parties actives par le biais d'une pièce de séparation (29) amovible, et
- que la pièce de séparation (29) est conçue sous la forme d'un dispositif de verrouillage supplémentaire de la tige de séparation (35).

4. Terminaison de câble selon la revendication 2, caractérisée par le fait
- que pour la liaison électrique de la tige de séparation (35) cylindrique avec le boulon d'extrémité (15), il est prévu un arrangement de contacts (55) de forme cylindrique muni de contact hélicoïdaux qui entoure le boulon d'extrémité (15) et qui est usiné sur l'extrémité correspondante de la tige de séparation (35).

5. Terminaison de câble selon la revendication 4, caractérisée par le fait
- qu'une tige filetée (42) passant à travers la tige de séparation (35) fixe le boulon d'extrémité (15) dans l'arrangement de contacts (55).

6. Terminaison de câble selon la revendication 5, caractérisée par le fait
- que la tige filetée (42) est reliée par le biais d'une vis d'entraînement (52) à un pendant (50) qui repose dans la pièce de liaison en croix (30) de manière à pouvoir pivoter.

7. Terminaison de câble selon la revendication 1, caractérisée par le fait
- que pour le montage du dispositif de mise à la terre (67), une rainure de fixation (57) est prévue à l'intérieur dans une bride intermédiaire (21) qui est insérée entre le blindage de terminaison de câble (18) et le boîtier de raccordement (23).

8. Terminaison de câble selon la revendication 7, caractérisée par le fait
- que le dispositif de mise à la terre (67) présente au moins deux segments (68) métalliques qui sont insérés dans la rainure de fixation (57),
- qu'une plaque (69) reliée avec le boulon d'extrémité (15) vient s'appuyer sur les au moins deux segments (68), et
- que le boulon d'extrémité (15) est relié électriquement à au moins l'un des segments (68) à l'aide d'une liaison de terre.

9. Terminaison de câble selon la revendication 1, caractérisée par le fait
- que la partie des au moins deux segments (68) du dispositif de mise à la terre (67) qui est glissée dans la rainure de fixation (57) est munie d'une bague torique (79) en saillie et collée dans une rainure, et
- que l'épaisseur du segment (68) muni de la bague torique (79) est légèrement supérieure à la largeur de la rainure de fixation (57).

10. Terminaison de câble selon la revendication 8, caractérisée par le fait
- que la liaison de terre est reliée à demeure avec au moins l'un des segments (68), alors qu'elle est enfichable sur le boulon d'extrémité (15), et
- que la liaison de terre est réalisée sous la forme d'un câble isolé (74).
